# EUROPEAN PATENT APPLICATION

(11) **EP 4 645 589 A1**
(43) Date of publication of application: **05.11.2025**
(21) Application number: 25166799.4
(22) Date of filing: 27.03.2025
(51) Int. Cl.: H01Q 1/22, G01D 4/00

(54) **RETROFIT REMOTE INTERNET OF THINGS ANTENNA SOLUTION FOR WATER METER**

(30) Priority: 30.04.2024 IN 202411034184; 30.05.2024 US 202418678269
(71) Applicant: Honeywell International Inc., Charlotte, NC 28202 (US)
(72) Inventor: POWELL, Steve, Charlotte, 28202 (US); SINGHVI, Shalu, Charlotte, 28202 (US); GANGWAL, Piyush Uday, Charlotte, 28202 (US); NAGASUNDARAM, Saravanan, Charlotte, 28202 (US); D P SRILEKHA, Polepeddy, Charlotte, 28202 (US); PAUL, Shubhadip, Charlotte, 28202 (US); SMITH, Adrian, Charlotte, 28202 (US)
(74) Representative: Haseltine Lake Kempner LLP

(57) **Abstract**

An antenna apparatus can include a coaxial cable with one end of the coaxial cable forming a remote antenna and the other end of the coaxial cable comprising a local coupler, wherein both ends of the coaxial cable are over-molded protection in a water meter installation. The local coupler can snap-on to a communications module and is operable across wideband RF frequencies ranging from, for example, 790MHz to 1900MHz. The antenna apparatus may also be implemented with an alternative RF coupler design, with two metal planes secured by an IP68 plastic housing with the provision of the coaxial cable to interface with a coupler and the remote antenna. The coupler can operate with low losses of less than, for example, 10 dB. In addition, the remote antenna can be installed on a water pit lid and in some cases, the coaxial cable itself can act as a remote antenna.

## Description

### CROSS-REFERENCE TO RELATED PATENT APPLICATION

This patent application claims priority to Indian Provisional Patent Application No. 202411034184, filed April 30, 2024, which is incorporated herein by reference in its entirety.

### TECHNICAL FIELD

Embodiments are generally related to antenna devices used in metering systems such as water meters. Embodiments further relate to remote Internet of Things (IOT) antennas, which can be implemented in association with RF couplers in the context of metering devices. Embodiments further relate to water metering systems and devices.

### BACKGROUND

Smart water meters are commonly installed in pits, sometimes reaching depths of up to one meter below the local surface level. Due to their location, these endpoints often face challenges in transmitting signals effectively, requiring higher power levels to compensate for signal losses. Additionally, when pits fill with water, further signal attenuation occurs, exacerbating the issue.

To mitigate these challenges, the use of external or remote antennas positioned closer to the pit lid can effectively reradiate RF signals, minimizing attenuation caused by water in the pit and the depth of the pit itself.

In areas with poor signal strength, smart water meters must operate at higher power levels to maintain connectivity. The 3rd Generation Partnership Project (3GPP) has defined three coverage levels - Normal (ECL 0), Robust (ECL 1), and Extreme (ECL 2) - each associated with a specific Maximum Coupling Loss (MCL) target. These levels dictate various transmission parameters, including transmit power, subcarrier subsets, and transmission attempts, aiming to ensure reliable communication under challenging conditions. In the most adverse scenario, ECL 2, transmission delays and the need for extensive repetitions significantly impact battery life, reducing it by, for example, over 60%.

Prior to installation, a cellular signal network survey is necessary to determine whether a smart water meter requires a remote antenna based on signal strength and network connectivity. However, transitioning an existing water meter radio from internal antenna to remote antenna configuration is costly and time-consuming. This situation can involve replacing the entire water meter unit and configuring the new setup for the respective customer, leading to increased downtime in areas with poor signal connectivity.

### BRIEF SUMMARY

The following summary is provided to facilitate an understanding of some of the features of the disclosed embodiments and is not intended to be a full description. A full appreciation of the various aspects of the embodiments disclosed herein can be gained by taking the specification, claims, drawings, and abstract as a whole.

It is, therefore, one aspect of the embodiments to provide an improved antenna apparatus for use with metering systems and devices such as water meters.

It is another aspect of the embodiments to provide for an improved water meting device that includes a coupling antenna and a remotely mounted antenna that together can improve the signal strength seen by a water meter radio and a cellular phone system.

It is a further aspect of the embodiments to provide for a coupling antenna or RF coupler that can be retrospectively fitted to an existing water meter that has a poor signal or fitted to a new water meter at the time of installation.

It is also an aspect of the embodiments to provide for the improvement of the signal strength for water meters installed in a pit whose depth otherwise prevents the water metering system from working reliably.

The aforementioned aspects and other objectives can now be achieved as described herein. In an embodiment, an antenna apparatus can include a coaxial cable with one end of the coaxial cable forming a remote antenna and the other end of the coaxial cable comprising a local coupler, wherein both ends of the coaxial cable are over-molded protection in a water meter installation comprising a water meter.

In an embodiment of the antenna apparatus, the local coupler can be configured to snap-on to and/or around a communications module (e.g., radio) of a water meter.

An embodiment of the antenna apparatus can also include a flexible printed circuit board.

In an embodiment of the antenna apparatus, the local coupler can comprise an RF coupler including an RF coupler operable for wideband RF frequencies ranging from 790MHz to 1900MHz.

In an embodiment of the antenna apparatus, RF Coupler can operate with low losses of less than 10 dB.

In an embodiment of the antenna apparatus, the local coupler can comprise a clip-shaped coupler that can engage as a clip with a radio associated with the water meter.

In an embodiment of the antenna apparatus, the remote antenna can be installed on a water pit lid

In an embodiment of the antenna apparatus, the coaxial cable can act as a RF coupler and remote antenna.

In another embodiment, a metering system, can include: a remote antenna; a coupler attached to a water meter communications module; and a coaxial cable picking up the RF signal from an internal antenna of the water meter communications module and which acts as the remote antenna to facilitate efficient transfer of RF signals between the remote antenna and the water meter communications module, thereby enhancing signal strength and minimizing signal attenuation within the metering system.

In an embodiment of the metering system, the coupler can comprise an RF coupler that can enhance the battery life of a battery associated with the metering system by 60% for ECL2 coverage locations.

In an embodiment of the metering system, the local coupler can comprise a clip-shaped coupler that can engage as a clip with the water meter communications module.

In an embodiment of the metering system, the water meter communications module can comprise a radio.

In an embodiment of the metering system, the coupler can comprise an RF coupler operable for wideband RF frequencies ranging from 790MHz to 1900MHz.

In an embodiment of the metering system, the coaxial cable can form the remote antenna at one end and the other end of the coaxial cable can comprise a local coupler, wherein both ends of the coaxial cable can be over-molded for protection in a water meter installation comprising a water meter.

In an alternative embodiment, two metal planes can form a local coupler, secured by IP68 compliant plastic housing with the provision of a coaxial cable to connect a local coupler at one end and a remote antenna on the other end.

### BRIEF DESCRIPTION OF THE DRAWINGS

The accompanying figures, in which like reference numerals refer to identical or functionally-similar elements throughout the separate views and which are incorporated in and form a part of the specification, further illustrate the present invention and, together with the detailed description of the invention, serve to explain the principles of the present invention.
FIG. 1 illustrates a pictorial diagram of a boundary box with a water meter located within the boundary box, in accordance with an embodiment;
FIG. 2 illustrates a pictorial diagram of a coupler snapped/clipped over a radio, which may be implemented in accordance with one or more embodiments in accordance with an embodiment;
FIG. 3 illustrates a pictorial diagram depicting an antenna that can be secured under a polymer pit lid with screws or clips, in accordance with an embodiment;
FIG. 4 illustrates a pictorial diagram depicting a coaxial cable connecting a coupler and an antenna, in accordance with an embodiment;
FIG. 5 illustrates a pictorial diagram depicting an antenna, in accordance with an embodiment;
FIG. 6 illustrates a pictorial diagram depicting the path of wire within the antenna, in accordance with an embodiment;
FIG. 7 illustrates a pictorial diagram depicting a coaxial cable stripped back at both ends revealing a conducting shield and a central conductor protected by a dielectric, in accordance with an embodiment;
FIG. 8 illustrates a pictorial diagram depicting a coupler, in accordance with an embodiment;
FIG. 9 illustrates a pictorial diagram of a coupler with a conductor picking up a radio module PCB ground plane and a coupler picking up a radio module antenna, in accordance with an embodiment;
FIG. 10 illustrates a pictorial diagram of a water meter communications module with an internal antenna and an another design of an RF coupler, in accordance with an embodiment;
FIG. 11 illustrates a pictorial diagram of the structure shown in FIG. 10 but with a view of the internal antenna, in accordance with an embodiment;
FIG. 12 illustrates a pictorial diagram showing an internal view of an RF coupler, in accordance with an embodiment;
FIG. 13 illustrates a pictorial diagram of an RF coupler design, in accordance with an embodiment;
FIG. 14 illustrates the RF coupler and internal antenna coupling, in accordance with an embodiment;
FIG. 15 illustrates the external antenna mounted under boundary box lid, in accordance with an embodiment;
FIG. 16 illustrates a pictorial representation of the pit lid tethered to the pit, in accordance with an embodiment;
FIG. 17 illustrates RF coupler snapped on communications module hosting internal antenna, in accordance with an embodiment;
FIG. 18 illustrates RF coupler snapped on communications module hosting internal antenna and volumetric meter with the communications module clipped thereon, in accordance with an embodiment; and
FIG. 19 illustrates a complete water meter installation within a boundary box, including a volumetric meter with an attached communications module, an internal antenna, an RF coupler snapped onto the communications module, a coaxial cable, and an antenna mounted beneath the boundary box lid, in accordance with an embodiment.

In the drawings described and illustrated herein, identical or similar parts and elements are generally indicated by identical reference numerals.

### DETAILED DESCRIPTION

The particular values and configurations discussed in these non-limiting examples can be varied and are cited merely to illustrate one or more embodiments and are not intended to limit the scope thereof.

Subject matter will now be described more fully hereinafter with reference to the accompanying drawings, which form a part hereof, and which show, by way of illustration, specific example embodiments. Subject matter may, however, be embodied in a variety of different forms and, therefore, covered or claimed subject matter is intended to be construed as not being limited to any example embodiments set forth herein; example embodiments are provided merely to be illustrative. Likewise, a reasonably broad scope for claimed or covered subject matter is intended. Among other issues, subject matter may be embodied as methods, devices, components, or systems. Accordingly, embodiments may, for example, take the form of hardware, software, firmware, or a combination thereof. The following detailed description is, therefore, not intended to be interpreted in a limiting sense.

Throughout the specification and claims, terms may have nuanced meanings suggested or implied in context beyond an explicitly stated meaning. Likewise, phrases such as "in one embodiment" or "in an example embodiment" and variations thereof as utilized herein may not necessarily refer to the same embodiment and the phrase "in another embodiment" or "in another example embodiment" and variations thereof as utilized herein may or may not necessarily refer to a different embodiment. It is intended, for example, that claimed subject matter include combinations of example embodiments in whole or in part.

In general, terminology may be understood, at least in part, from usage in context. For example, terms such as "and," "or," or "and/or" as used herein may include a variety of meanings that may depend, at least in part, upon the context in which such terms are used. Generally, "or" if used to associate a list, such as A, B, or C, is intended to mean A, B, and C, here used in the inclusive sense, as well as A, B, or C, here used in the exclusive sense. In addition, the terms "one or more" or "at least one" as used herein, depending at least in part upon context, may be used to describe any feature, structure, or characteristic in a singular sense or may be used to describe combinations of features, structures, or characteristics in a plural sense. Similarly, terms such as "a," "an," or "the", again, may be understood to convey a singular usage or to convey a plural usage, depending at least in part upon context. In addition, the term "based on" may be understood as not necessarily intended to convey an exclusive set of factors and may, instead, allow for existence of additional factors not necessarily expressly described, again, depending at least in part on context. Furthermore, the term "at least one" as utilized herein can refer to "one or more". For example, "at least one widget" may refer to "one or more widgets".

Note that as utilized herein, the term 'coupler' relates to an RF coupler. The terms "coupler" and "RF coupler" as utilized herein can relate to the same device or component. An RF (Radio Frequency) coupler is a device that can be used to transfer RF signals from one circuit or transmission line to another while maintaining signal integrity. The coupler can serve as an interface between two radiating elements, allowing for efficient signal transmission without significant signal loss or distortion.

The term "antenna" as used herein, on the other hand, can relate to a transducer that can convert electrical signals into electromagnetic waves for transmission or vice versa. The antenna radiates or receives electromagnetic waves in the form of radio waves. Antennas are primarily responsible for sending and receiving RF signals wirelessly.

While antennas are designed to radiate or receive electromagnetic waves, RF couplers can facilitate the transfer of RF signals between components or transmission lines. They are often used in scenarios where there is a need to connect different parts of a system while maintaining signal strength and minimizing losses. RF couplers can facilitate the transfer of RF signals between radiating elements either through air or a magnetic medium, enabling the reradiation of RF energy via a secondary radiating element.

As will be discussed in more detail herein, the disclosed embodiments can enhance the usability of a standard NB-IoT AMI, also known as an "NB-IoT smart water meter," in situations where signal strength permits. Even in cases where the depth of the pit would have previously prevented the use of such an AMI, the disclosed embodiments can enable its utilization.

An embodiment can include one end that attaches (snaps onto) a water meter radio, and the other end that attaches to or near the lid of the boundary box. This setup enhances the strength of radio signals received by both the water meter radio and the cellular phone system, leading to several benefits including for example, improved battery life and product longevity for the water meter radio, as the battery is not replaceable. Further benefits include enhanced reliability of water meter readings, alarms, etc., and increased accessibility to metering for more of the public through NB-IoT smart meters, which can significantly boost the success rate of NB-IoT installations while promoting the adoption of all NB-IoT products, even in scenarios where an embodiment may not be necessary.

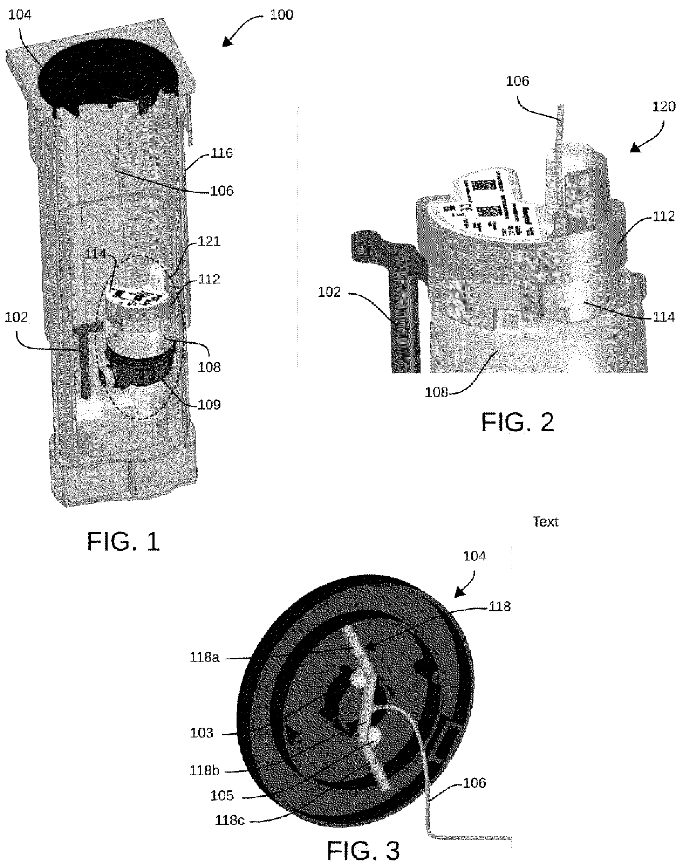

FIG. 1 illustrates a pictorial diagram of a water meter installation 100 with a water meter 121 located within a boundary box 116, in accordance with an embodiment. The water meter installation 100 functions as a water metering system. In the embodiment shown in FIG. 1, the boundary box 116 can function as a protective enclosure or housing that can surround the water meter 121 and its associated components. In the configuration shown in FIG. 1, the boundary box 116 can be implemented as a housing, which can surround and maintains the water meter 121. Note that the boundary box 116 is shown herein for illustrative and exemplary purposes. That is, the boundary box 116 may be an off-the shelf available component used by utilities, for example, for water meter installation in a pit. The boundary box 116 is depicted herein simply to illustrate a complete solution installation scenario. That is, other embodiments may be implemented without the use of a boundary box such as the boundary box 116.

The boundary box 116 can serve to protect the water meter 121 from physical damage, such as, for example, accidental impacts or exposure to harsh weather conditions. The boundary box 116 also helps prevent tampering or unauthorized access to the water meter 121, thereby ensuring the accuracy of water usage measurements and preventing water theft.

While the boundary box 116 can provide protection and security, it also can allow authorized personnel, such as utility workers or meter readers, to access the water meter 121 easily for maintenance, repair, or reading purposes. The boundary box 116 may be implemented with various sizes and materials, depending on the specific requirements of the installation site and the type of water meter 121 being used. The boundary box 116 may be installed underground or at ground level near the point where the water service enters a property as part of the water meter installation 100.

As shown in the arrangement depicted in FIG. 1, a coaxial cable 106 may extend from a pit lid 104 (which maintains an antenna 118 shown, for example, in FIG. 3). That is, the coaxial cable 106 can connect the antenna 118 (not shown in FIG. 1 but located at the top of the boundary box 116 by the pit lid 104 to a coupler 112 (e.g., an RF coupler), which can be clipped to a communications module of the water meter 121. The top 114 of the communications module (e.g., radio) is shown in FIG. 1. The coaxial cable 106 has sufficient slack to allow for removal of the pit lid 104. Note that the pit lid 104 may be configured from a polymer material.

The water meter 121 can include a radio 114 located and surrounded by the coupler 112. The radio 114 (also referred to as a communications module) can communicate in NBIOT frequency bands which in turn can interact with the coupler 112. Note that the antenna 118 can function as an external antenna with respect to the water meter 121 and radio 114 as part of an antenna apparatus that can include the coaxial cable 106. The coupler 112 may function as a local coupler.

FIG. 2 illustrates a pictorial diagram of the 112 coupler snapped/clipped over the 114 radio, in accordance with an embodiment. Note that in the figures illustrated and described herein, identical reference numerals may refer to identical or similar parts or elements. FIG. 2 depicts the radio 114 (i.e., communications module) with respect to the coupler 112 with a portion of the coaxial cable 106 shown extending upward.

FIG. 3 illustrates a pictorial diagram depicting the antenna 118 secured under the polymer pit lid 104 with attachment mechanisms 103 and 106 (e.g., screws or clips), in accordance with an embodiment. The antenna 118 can be fitted in other types of pits such as, for example, concrete with metal lids. The antenna 118 can be implemented as part of an antenna apparatus mounted horizontally. As shown in the figures, the antenna 118 can be configured with a plurality of sections or lines, which can be bent slightly from one another. As depicted, the antenna 118 can be arranged in three sections each of which may be slightly bent at an angle from one another.

That is, the antenna 118 shown in FIG. 3 can include two or more antenna sections configured in a zig-zag arrangement with each section bent at angle from with respect to one another. Note that the zig-zag shape of antenna 118 is not a limiting feature of the embodiments. That is, the antenna 118 can be configured in other shapes. The zig-zag shape or form of antenna 118 as depicted in the figures is shown simply to fit the needed length of the antenna 118 within the diameter of the boundary box 116 but should not be considered as a limiting feature of the embodiments.

For example, a first antenna section 118a can. be bent angularly with respect to a second antenna section 118b (in this case, a middle antenna section), and the second antenna section 118b can be bent at an angle with respect to a third antenna section 118c. Note that the third antenna section 118c and the first antenna section 118b are essentially parallel to one another. In this regard, the antenna 118 can be said to have a Z-shape or zig-zag shape and can be configured in some embodiments as a Z-shaped or zig-zag shaped antenna. As indicated previously, embodiments may not be limited to such a particular zig-zig shape or Z-shape.

In some embodiments, the boundary box 116 can serve as a protective enclosure for the water meter 121 and its components, shielding it from physical damage and unauthorized access while facilitating easy accessibility for authorized personnel. This arrangement not only ensures the accuracy of water usage measurements but also helps prevent water theft. Additionally, the inclusion of a coaxial cable 106, as shown in FIG. 1, extending from the pit lid 104 to the radio 114 of the water meter 121, can enhance the functionality and connectivity of the system. This configuration can allow for seamless communication between the radio 114 and other system components, as indicated in FIG. 2 and FIG. 3. With attention to detail in design and installation, the water meter installation 100 offers a robust solution adaptable to various installation sites and water meter types, ultimately contributing to the efficiency and reliability of water management systems.

The antenna 118 can be implemented as an IP-68-compliant remotely mounted antenna and a coupling antenna to improve the signal strength of NB-IOT water meters fitted in underground boundary boxes and pits. The disclosed embodiments can be retrospectively fit to a water meter. The solution couples the signals from the internal antenna to an external antenna through RF coupler. Furthermore, ferrous plates (to aid finding the pit with a metal detector) can be included in the lid 104 in some embodiments without significantly reducing the strength of the RF signal.

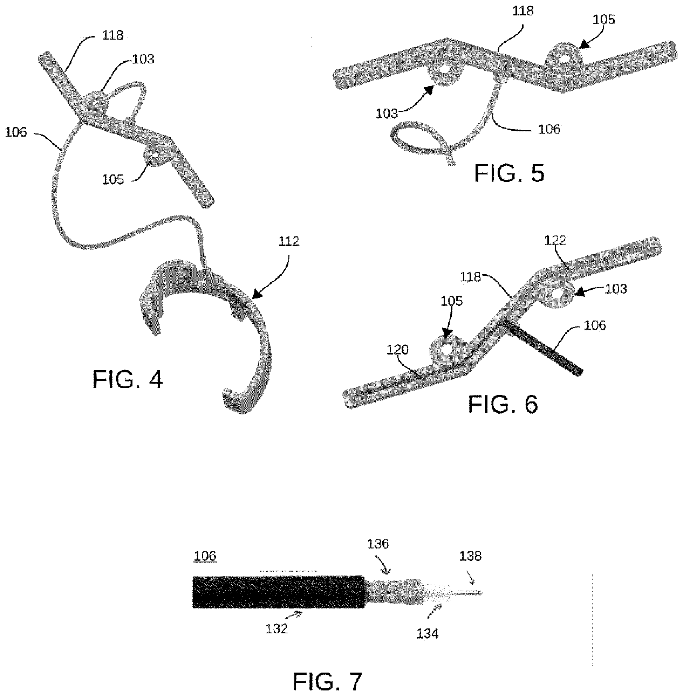

FIG. 4 illustrates a pictorial diagram depicting the coaxial cable 106 connecting the coupler 112 and the antenna 118, in accordance with an embodiment. The coupler 112 can be shaped as a clip that fits snugly about the radio 114. In FIG. 4, the coaxial cable 106 is depicted connecting the coupler 112 and the antenna 118, forming a crucial link in the communication chain of the water meter system. The coupler 112 can be designed to function not only as a connector but also as a clip, which offers several advantages. This dual functionality can streamline the installation process by securely fastening the coupler 112 around the radio 1144, ensuring stable connectivity while minimizing the risk of disconnection or interference. This snug fit can enhance the reliability and longevity of the system, thereby reducing maintenance requirements and potential downtime.

Note that the radio 114 plays a key role within the water meter system of the water meter 121, facilitating wireless communication between various components. Positioned atop the central portion 108 of the water meter 121, the radio 1144 interacts with the RF coupler, exchanging essential data and commands. Through this RF communication, the radio 114 can enable real-time monitoring of water usage, remote configuration adjustments, and seamless integration with utility management systems.

The integration of the antenna 118 into the system amplifies its capabilities, extending its reach and enhancing signal strength. As depicted in FIG. 3, the antenna 118 is securely positioned beneath the polymer pit lid 104, utilizing attachment mechanisms such as screws or clips. This strategic placement ensures optimal transmission and reception of signals, regardless of environmental conditions. Additionally, the antenna 118 can be mounted horizontally or vertically, offering flexibility in deployment to suit diverse installation scenarios.

Moreover, the antenna 118 Whether fitted in polymer or concrete pits, the antenna 118 remains a critical component in ensuring seamless data transmission within the water meter system.

In essence, the coupling of the coupler 112, radio 114, and antenna 118 can form a robust communications infrastructure within the boundary box 116, enabling accurate metering, secure data transmission, and, for example, efficient water management.

FIG. 5 illustrates a pictorial diagram depicting the antenna 118, in accordance with an embodiment. The antenna 118 is shown in FIG. 5 in a view opposite that of the antenna as shown in FIG. 4.

FIG. 6 illustrates a pictorial diagram depicting the path of wire within the antenna 118, in accordance with an embodiment. That is, a wire may be formed from two wire conductor sections 120 and 122. In addition, FIG. 6 depicts a portion of the coaxial cable 106 extending from the antenna 118. As discussed and shown previously herein, the coaxial cable 106 extends downward toward the coupler 112.

FIG. 7 illustrates a pictorial diagram depicting the coaxial cable 106 stripped back at one end revealing a conducting shield 136 and a central conductor 138 protected by a dielectric 134, in accordance with an embodiment. It should be appreciated that the illustration depicted in FIG. 7 shows the internal components of the coaxial cable 106 and should not be considered a limiting feature of the embodiments.

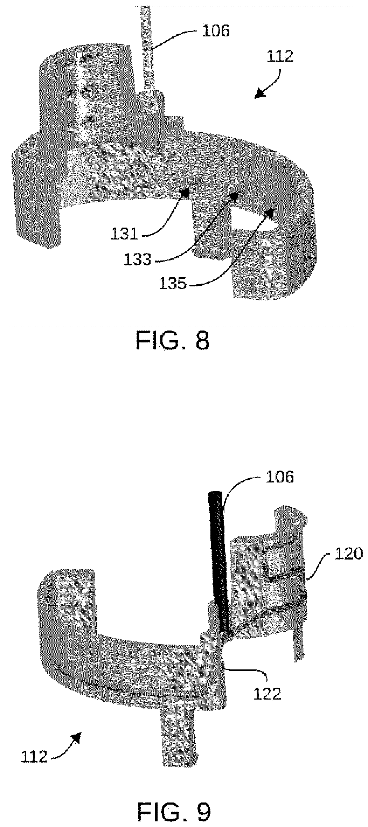

FIG. 8 illustrates a pictorial diagram depicting the coupler 112 and a portion of the coaxial cable 106, in accordance with an embodiment. The wire discussed (e.g., wire section 122) above is shown partially located on the other side of holes 131, 133, 135 formed in the coupler 112. Note that the depicted "wire" shown is part of the stripped black coaxial cable 106 shown in FIG. 7.

FIG. 9 illustrates a pictorial diagram of the coupler 112 with the conductor 122 picking up a radio module PCB ground plane and the coupler 112 picking up a radio module antenna via the conductor 120 in accordance with an embodiment.

The configuration shown in FIGS. 1-9 utilizes the coaxial cable 106, which can serve dual functions: connecting to a radio water meter's internal antenna linked with the radio 1144 and communicating with a remotely positioned antenna 118. This remote antenna 118 can be situated at ground level or a similar location where the signal strength from a cell tower is optimal.

In some embodiments, both the RF coupler 112 and the remote antenna 118 can be encased in polymer through over-molding, creating a protective housing suitable for water meter environments. The coupler 112 is designed to snap around or over the internal antenna of the radio 114, effectively channeling RF energy to the coaxial cable 106. This integrated design offers several advantages: it combines the coupler, coaxial cable, and antenna into a single component, minimizing part count and cost, while maximizing simplicity and robustness. With no joints or connectors, the design minimizes potential failure points.

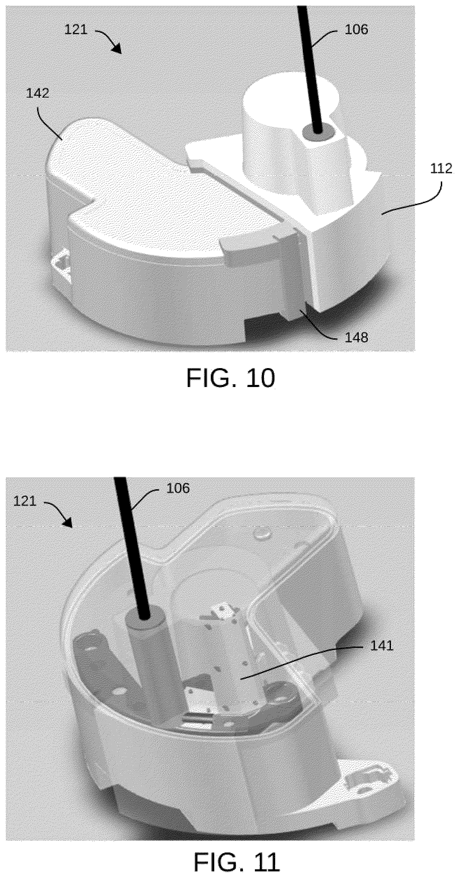

FIG. 10 illustrates a pictorial diagram of the water meter communications module 142 with an internal antenna and the another coupler design 112, in accordance with an embodiment. The configuration shown in FIG. 10 may be implemented as a retrofit snap-on installation. The arrangement shown in FIG. 10 can further includes a plastic latch feature 148, which can snap on the water meter communications module 142. The coaxial cable 106 is also shown in FIG. 10 as extending upward from the coupler 112 and can be used to connect the external or remote antenna.

FIG. 11 illustrates a pictorial diagram of the structure of the water meter communications module 121 shown in FIG. 10 but with a view of an internal antenna 141 and other internal components, in accordance with an embodiment. Note that the internal antenna 141 can function as an antenna apparatus that can include the external antenna 118 and the internal apparatus 141.

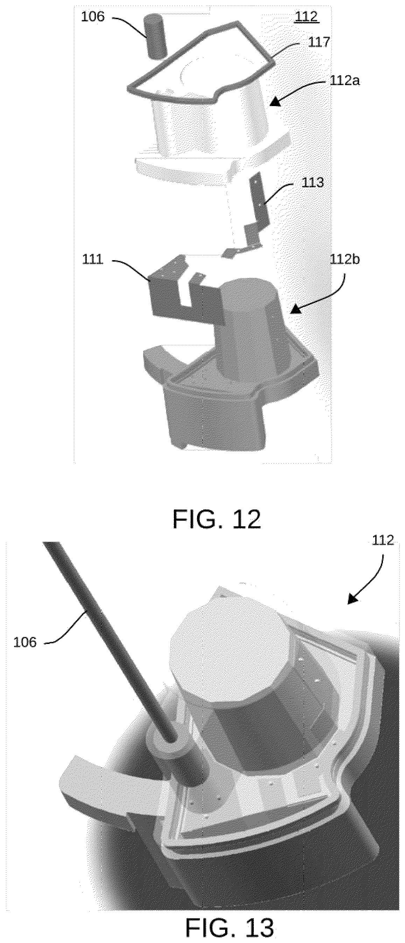

FIG. 12 illustrates a pictorial diagram showing an internal view of the RF coupler 112, in accordance with an embodiment. The RF coupler 112 can include a IP68 compliant coupler housing that can host a RF coupling metal or copper plane 113, which can pick up the radio PCB ground plane 111 towards feature 112b picking up the radio PCB ground plane 111 and copper plane 113 towards feature 112a, picking up radio module internal antenna signals. A rubber gasket 117 as shown in FIG. 12 can assist in rendering the housing IP68 compliant. Features 112a and 112b can be glued together and secured with the rubber gasket 117 for achieving the IP68 rating.

FIG. 12 thus shows an exploded view of the design of the RF coupler 112 depicting a visual breakdown of the internal workings of the RF coupler 112. Within the RF coupler 112, a housing can be designed to comply with IP68 standards. The housing can be configured to accommodate an RF coupling copper plane 113. This RF coupling copper plane 113 can serve, for example, two purposes: it can collect the radio PCB ground plane 111 towards feature 112b and the copper plane 113 towards feature 112a, thereby picking up both the radio PCB ground plane and internal antenna signals from the radio or communications module. Feature 112a may function as part of the housing and can fit over feature 112b. To ensure that the housing meets IP68 requirements, a rubber gasket 117 can be included. Features 112a and 112b can be affixed together using glue and secured with the rubber gasket 117 to achieve the IP68 rating. The PCB ground plane 111 and RF coupling copper plane 113 can be located within the housing.

FIG. 13 illustrates a transparent view of the coupler design of the coupler 112, in accordance with an embodiment. The coaxial cable 106 is shown as extending upward from the RF coupler 112. Note that the configuration shown in FIGS. 10, 11, 12, 13 depicts a design of an RF coupler that can include the use of a rigid PCB or a flexible-based PCB formed from a material such as FPC (Flexible Printed copper) or stainless steel, hosted inside a polymer housing. Rigid/FPC/metal planes can be designed for coupling the maximum RF signal through air from an internal antenna for wide frequency NBIOT bands.

The coaxial cable 106 may be connected to the RF coupler secured and supported by a plastic guide. A remote antenna can be connected to the other end of the coaxial cable 106 supporting NBIOT frequency bands. In addition, the RF coupler can be IP68 compliant by gluing the plastic housing 112, which can protect it from a harsh environment. Furthermore, the RF coupler 112 can snap around/over the internal antenna and can couple the RF energy to remote antenna through air medium. The RF coupler loss can be less than 10 dB across the wideband frequency range.

The configuration arrangement depicted in FIGS. 10, 11, 12, and 13 thus illustrates an alternative embodiment of a design for an RF coupler. As discussed above, this coupler can be constructed using a rigid PCB, a Flexible Printed Copper (FPC), or stainless steel, all housed within a polymer casing. The rigid/FPC/metal planes can be engineered to efficiently couple RF signals transmitted through the air medium from the internal antenna, particularly for wide frequency NBIOT bands.

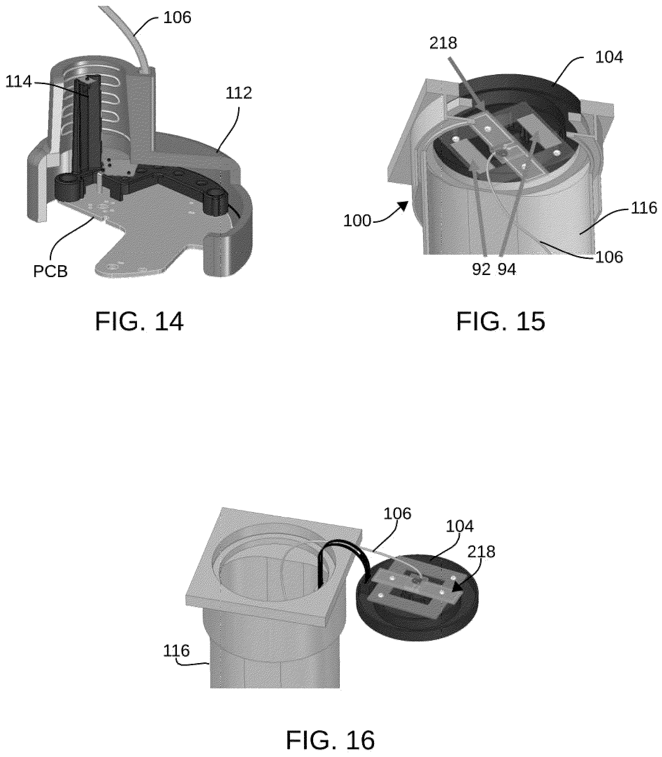

FIG. 14 illustrates a cut-away view of the RF coupler 112 and the internal antenna 114 in an RF coupling arrangement, in accordance with an embodiment. The coaxial cable 106 extends upward from the device as discussed previously.

FIG. 15 illustrates a pictorial representation of the water meter installation 100 with the lid 104 located atop the boundary box 116, in accordance with an embodiment. Note that the configuration shown in FIG. 15 is a pictorial representation and not the actual design of a remote antenna. In the example embodiment shown in FIG. 15, an antenna 218 can be fitted under the polymer pit lid 104. The antenna 219 can be encased for IP68 protection, with the antenna 218 screwed to the polymer lid 104. Optionally, ferrous plates 92 and 94 can be sized and posited to have a minimal effect on the NBIOT RF signal.

FIG. 16 illustrates a pictorial representation of the pit lid 104 tethered to the pit, in accordance with an embodiment. The cable 106 is also shown as extending from the antenna 218 and the lid 104 into the boundary box 116. Note that the configuration shown in FIG. 16 is a pictorial representation and not the actual design of a remote antenna.

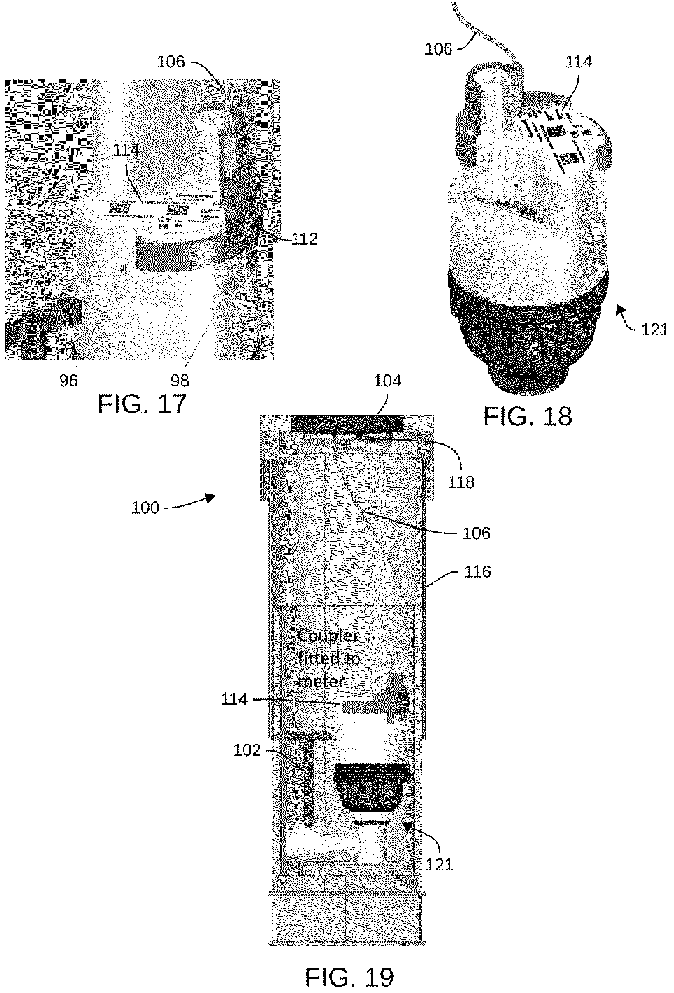

FIG. 17 illustrates the RF coupler 112 snapped on the communications module or radio 114 hosting an internal antenna, in accordance with an embodiment. FIG. 17also depicts. Multiple clip points 96 and 98 with the clip securely around the device are also shown in FIG. 17.

FIG. 18 illustrates the RF coupler snapped onto the radio 114 hosting an internal antenna and the volumetric water meter 121 with the radio 114 clipped thereon, in accordance with an embodiment.

FIG. 19 illustrates complete solution of the water meter installation 100 in the context of the boundary box 116. The solution offered by the water meter installation 100 can include the volumetric water meter 121, a communications module (e.g., radio 114) clipped on the volumetric water meter 121 and hosting an internal antenna, along with an RF coupler snapped onto the communications module/radio 114. The water meter installation 100 can further include the coaxial cable 106 and the antenna 118 installed under boundary box lid 104.

Sufficient slack in the cable is important for maintaining accessibility to the pit in the water metering system. This slack can ensure that technicians or maintenance personnel can easily reach the components within the pit without risking damage to the cable or the connections. Having ample slack in the cable provides flexibility during installation and servicing activities. It prevents strain on the cable and its connections, reducing the likelihood of damage or disconnection due to tension or movement. Additionally, it facilitates adjustments or replacements of components within the system without the need for extensive reinstallation or cable management.

Furthermore, the presence of sufficient slack accommodates any potential movement or settling of components over time, ensuring continued functionality and reliability of the water metering system. It also allows for future upgrades or modifications to the system without requiring significant alterations to the cable layout or connections.

Based on the foregoing, it can be appreciated that a number of embodiments are disclosed herein, including preferred and alternative embodiments. For example, in an embodiment, an antenna apparatus can include a coaxial cable with one end of the coaxial cable forming a remote antenna and the other end of the coaxial cable comprising a local coupler, wherein both ends of the coaxial cable are over-molded protection in a water meter installation comprising a water meter.

In an embodiment, the local coupler can be configured to snap-on to a communications module of the water meter.

In an embodiment, the local coupler can be implemented as an RF coupler operable for wideband RF frequencies ranging from 790MHz to 1900MHz.

In an embodiment, the RF coupler can operate with low losses of less than 10 dB for wideband RF frequencies ranging from 790Mhz to 1900 Mhz.

In an embodiment, the local coupler can be implemented as a clip-shaped coupler that can engage as a clip with a radio associated with the water meter.

In an embodiment, the remote antenna can be installed on a water pit lid.

In an embodiment, the coaxial cable can function as a remote antenna.

In another embodiment, an antenna apparatus can include a coaxial cable and a remote antenna, a local coupler formed by two metal planes, and a plastic housing, wherein the local coupler is secured by the plastic housing, wherein the coaxial cable connects to the local coupler at one end and the remote antenna on the end.

In an embodiment, the plastic housing can be implemented as an IP68 compliant plastic housing.

In another embodiment, a metering system can be implemented, which can include a remote antenna, a coupler attached to a water meter communications module, and a coaxial cable picking up the RF signal from an internal antenna of the water meter communications module and which acts as the remote antenna to facilitate efficient transfer of RF signals between the remote antenna and the water meter communications module, thereby enhancing signal strength and minimizing signal attenuation within the metering system.

In an embodiment, the coupler can be implemented as an RF coupler that can enhance the battery life of a battery (or batteries) associated with the metering system by, for example, 60% for ECL2 coverage locations.

It will be appreciated that variations of the above-disclosed and other features and functions, or alternatives thereof, may be desirably combined into many other different systems or applications. It will also be appreciated that various presently unforeseen or unanticipated alternatives, modifications, variations or improvements therein may be subsequently made by those skilled in the art which are also intended to be encompassed by the following claims.

## Claims

1. An antenna apparatus, comprising:
a coaxial cable with one end of the coaxial cable forming a remote antenna and the other end of the coaxial cable comprising a local coupler, wherein both ends of the coaxial cable are over-molded protection in a water meter installation comprising a water meter.

2. The antenna apparatus of claim 1 wherein the local coupler is configured to snap-on to a communications module of the water meter.

3. The antenna apparatus of claim 1 wherein the local coupler comprises an RF coupler operable for wideband RF frequencies ranging from 790MHz to 1900MHz.

4. The antenna apparatus of claim 1 further comprising an RF coupler operates with low losses of less than 10 dB for wideband RF frequencies ranging from 790Mhz to 1900 Mhz.

5. The antenna apparatus of claim 1 wherein the local coupler comprises a clip-shaped coupler that engages as a clip with a radio associated with the water meter.

6. An antenna apparatus, comprising:
a coaxial cable and a remote antenna;
a local coupler formed by two metal planes;
a plastic housing, wherein the local coupler is secured by the plastic housing, wherein the coaxial cable connects to the local coupler at one end and the remote antenna on the end.

7. The antenna apparatus of claim 6 wherein the plastic housing comprises an IP68 compliant plastic housing.

8. The antenna apparatus of claim 6 wherein the coupler comprises an RF coupler.

9. A metering system, comprising:
a remote antenna
a coupler attached to a water meter communications module;
a coaxial cable picking up the RF signal from an internal antenna of the water meter communications module and which acts as the remote antenna to facilitate efficient transfer of RF signals between the remote antenna and the water meter communications module, thereby enhancing signal strength and minimizing signal attenuation within the metering system.

10. The metering system of claim 8 wherein the coupler comprises an RF coupler that enhances a battery life of a battery associated with the metering system by 60% for ECL2 coverage locations.
